# EUROPÄISCHE PATENTSCHRIFT

(11) **EP 2 720 916 B1**
(45) Veröffentlichungstag und Bekanntmachung des Hinweises auf die Patenterteilung: **30.08.2017**
(21) Anmeldenummer: 12719634.3
(22) Anmeldetag: 26.04.2012
(51) Int. Cl.: B60S 1/38

(54) **WISCHBLATT ZUM REINIGEN VON SCHEIBEN INSBESONDERE VON KRAFTFAHRZEUGEN**
WIPER BLADE FOR CLEANING WINDOWS, IN PARTICULAR OF MOTOR VEHICLES
ESSUIE-GLACE POUR LE NETTOYAGE DE VITRES, NOTAMMENT D'AUTOMOBILES

(30) Priorität: 15.06.2011 DE 102011077519
(43) Veröffentlichungstag der Anmeldung: 23.04.2014
(73) Patentinhaber: Robert Bosch GmbH, 70442 Stuttgart (DE)
(72) Erfinder: VANDENHOVE, Jan, 3471 Hoeleden (BE)
(86) Internationale Anmeldenummer: PCT/EP2012/057650
(87) Internationale Veröffentlichungsnummer: WO 2012/171699

(56) Entgegenhaltungen:
- DE-A1- 19 718 490
- DE-A1-102009 002 997
- DE-U1-202006 012 252

## Beschreibung

### Stand der Technik

Bei Wischblättern der im Oberbegriff des Anspruchs 1 bezeichneten Art soll das Tragelement über das gesamte vom Wischblatt bestrichene Wischfeld eine möglichst gleichmäßige Verteilung des vom Wischerarm ausgehenden Wischblatt-Anpressdrucks an der Scheibe gewährleisten. Durch eine entsprechende Krümmung des unbelasteten Tragelements - also wenn das Wischblatt nicht an der Scheibe anliegt - werden die Enden der im Betrieb des Wischblatts vollständig an der Scheibe angelegten Wischleiste durch das dann gespannte Tragelement zur Scheibe belastet, auch wenn sich die Krümmungsradien von sphärische gekrümmten Fahrzeugscheiben bei jeder Wischblattposition ändern. Die Krümmung des Wischblatts muss also etwas stärker sein als die im Wischfeld an der zu wischenden Scheibe gemessene stärkste Krümmung. Am Tragelement ist eine Anschlussvorrichtung befestigt, über die die Verbindung zum Wischerarm hergestellt wird.

Aus der DE 197 18 490 A, die den ersten Teil des Anspruchs 1 offenbart, ist es bekannt, die Anschlussvorrichtung mittels einer Schweißverbindung am Tragelement zu befestigen. Dazu wird das entweder aus Metall oder einem Kunststoff bestehende wischblattseitige Verbindungselement auf das Tragelement aufgebracht oder aufgeschoben und mittels einer Widerstandsschweißung im Falle eines metallenen Verbindungselements oder mittels einer Ultraschallschweißung im Falle eines Kunststoff-Verbindungselements stoffschlüssig mit dem Tragelement verbunden. Diese Schweißverbindung ist im Alltag extremen Bedingungen ausgesetzt und muss hohen Drehmomenten und Vibrationen auch bei unterschiedlichen Witterungsbedingungen standhalten Insbesondere bei den in großen Stückzahlen hergestellten Wischblättern stellt eine Schweißverbindung hohe Qualitätsanforderungen an die Prozessführung und verteuert damit das Wischblatt, was gerade bei Massenprodukten zu vermeiden ist. Dokument DE 10 2009 002 997 A offenbart ein Wischblatt mit eine Anschlussvorrichtung mit zweiteilig ausgeführten Aufnahmen.

### Vorteile der Erfindung

Das erfindungsgemäße Wischblatt mit den Merkmalen des Hauptanspruchs hat den Vorteil, dass die Anschlussvorrichtung durch einfaches Steckverbinden auf dem Tragelement montiert werden kann. So gelingt eine einfache und ortsfeste Positionierung der Anschlussvorrichtung, wenn das Tragelement mindestens eine Öffnung aufweist, durch die der mindestens eine Steckkörper in Zusammenbaustellung ragt. Die Einzelteile lassen sich kostengünstig als Spritzgussteile herstellen und können vollautomatisch zusammengebaut werden. Die Montage wird dadurch prozesssicher und kostengünstig, was insbesondere bei Massenartikeln einen großen Vorteil darstellt.

Durch die in den Unteransprüchen aufgeführte Maßnahmen ergeben sich vorteilhafte Weiterbildungen des erfindungsgemäßen Wischblatts.

Weist die Steckaufnahme die Form einer Sacklochbohrung auf, kann der Steckkörper nach außen unsichtbar eingesteckt werden, was insbesondere die Ästhetik verbessert, wenn keine weitere Abdeckkappe benutzt wird.

Ist die Steckaufnahme in Form einer Stufenbohrung ausgeführt, kann der Steckkörper mit der Stufe verrasten und die Verbindung dadurch verbessern. Eine weitere Verbesserung ergibt sich, wenn der Steckkörper in Zusammenbaustellung aufgeweitet ist. Es ist jedoch auch möglich, zur Verbesserung der Verbindungen die Aufnahmeteile miteinander komplett zu verrasten und oder zu verkleben.

Besonders einfach und prozesssicher lasst sich das wischblattseitige Teil der Anschlussvorrichtung mit dem Tragelement dann verbinden, wenn die beiden Aufnahmeteile jeweils über ein Filmscharniergelenk miteinander verbunden sind. Dadurch wird es möglich, nach dem Aufsetzen des ersten Aufnahmeteils auf das Tragelement, die zweiten Aufnahmeteile einzuschwenken und die Verbindung herzustellen.

Das erfindungsgemäße Verfahren zum Herstellen eines Wischblatts zeichnet sich dadurch aus, dass die Anschlussvorrichtung mit seinen ersten Aufnahmeteilen auf eine konvexe Oberseite des Tragelements gelegt wird und die zweiten Aufnahmeteile von einer konkaven Unterseite so angebracht werden, dass Steckkörper der zweiten Aufnahmeteile in Steckaufnahmen der ersten Aufnahmeteile ragen und die beiden Aufnahmeteile relativ zueinander befestigt werden. Die Verbindung lässt sich verbessern, wenn die Steckkörper mittels einer Wärmebehandlung nach deren Einstecken in die Steckaufnahmen aufgeweitet werden.

### Zeichnung

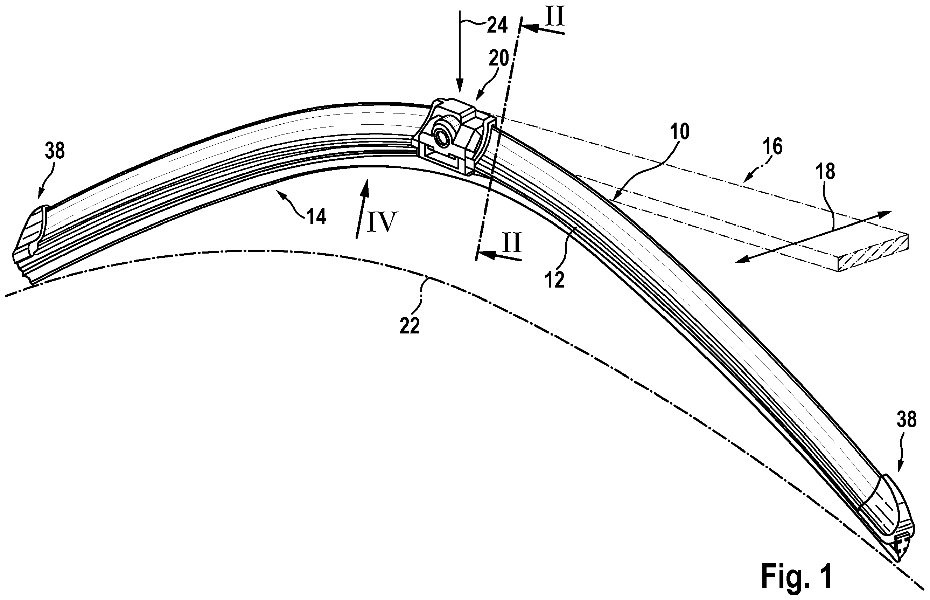

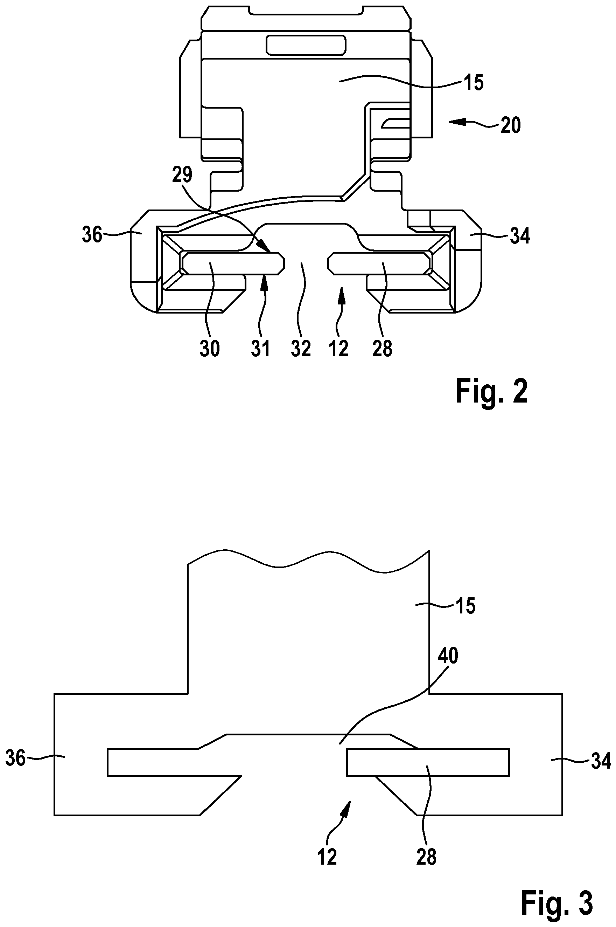

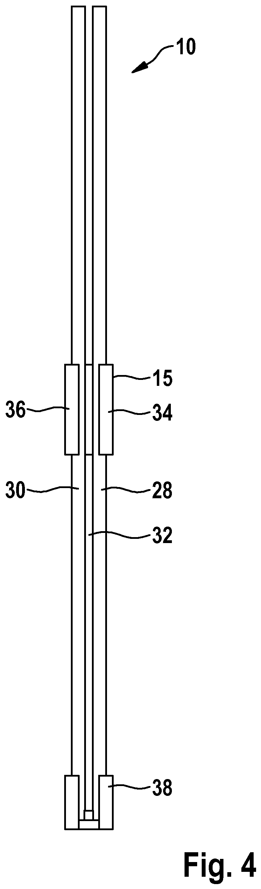

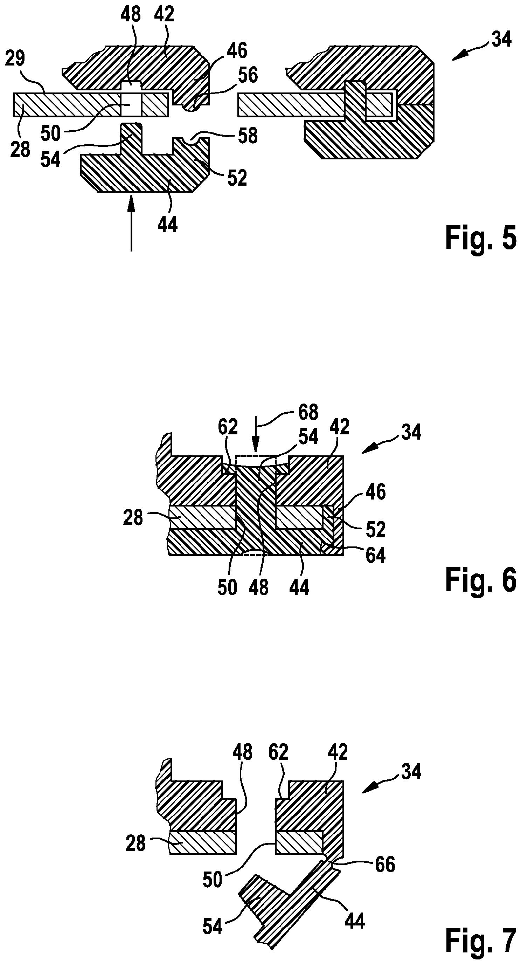

In der Zeichnung zeigen: Figur 1 ein erfindungsgemäßes Wischblatt in perspektivischer Darstellung mit strichpunktiert angedeutetem Wischerarm und strichpunktiert angedeuteter Oberfläche einer Windschutzscheibe, Fig. 2 zeigt eine Ansicht nach II-II in Fig. 1, Fig. 3 eine schematische Darstellung der Ansicht nach Fig. 2 mit nur einer Federschiene, Fig. 4 eine schematische Ansicht in Blickrichtung IV in Fig. 1 mit nur einer Endkappe und die Figuren 5 bis 7 Ausführungsvarianten jeweils in einer Detailansicht im Schnitt.

### Beschreibung der Ausführungsbeispiele

Ein in Figur 1 gezeigtes Wischblatt 10 weist ein bandartig langgestrecktes, federelastisches Tragelement 12 auf (Figuren 1 und 2), an dessen unteren, der Scheibe zugewandten Bandseite 13 eine langgestreckte, gummielastische Wischleiste 14 längsachsenparallel befestigt ist. An der oberen, von der Scheibe abgewandten Bandseite 11 des auch als Federschiene zu bezeichnenden Tragelements 12 ist in dessen Mittelabschnitt das wischblattseitige Teil 15 einer Anschlussvorrichtung angeordnet, mit deren Hilfe das Wischblatt 10 gelenkig mit einem in Figur 1 strichpunktiert angedeuteten Wischerarm 16 lösbar verbunden werden kann. Der in Richtung eines Doppelpfeils 18 in Figur 1 pendelnd angetriebenen Wischerarm 16 ist in Richtung eines Pfeils 24 zur zu wischenden Scheibe - beispielsweise zur Windschutzscheibe eines Kraftfahrzeugs belastet - deren Oberfläche in Figur 1 durch eine strichpunktierte Linie 22 angedeutet ist. Da die Linie 22 die stärkste Krümmung der Scheibenoberfläche darstellen soll ist klar ersichtlich, dass die Krümmung des mit seinen beiden Enden an der Scheibe anliegenden, noch unbelasteten Wischblatts stärker ist als die maximale Scheibenkrümmung (Figur 1). Unter dem Anpressdruck (Pfeil 24) legt sich das Wischblatt 10 mit seiner Wischlippe 26 über seine gesamte Länge an der Scheibenoberfläche 22 an. Dabei baut sich im aus Metall gefertigten, federelastischen Tragelement 12 eine Spannung auf, welche für eine ordnungsgemäße Anlage der Wischleiste 14 beziehungsweise der Wischlippe 26 über deren gesamte Länge an der Scheibenoberfläche 22 sowie für eine gleichmäßige Verteilung des Anpressdrucks (Pfeil 24) sorgt.

Im Folgenden soll nun auf die besondere Ausgestaltung des erfindungsgemäßen Wischblatts näher eingegangen werden.

In Fig. 2 ist erkennbar, dass das Tragelement 12 aus zwei, voneinander getrennten Federschienen 28 und 30 aufgebaut ist, die zueinander beabstandet sind und einen Spalt 32 begründen. Die Anschlussvorrichtung 15 weist in einem unteren Bereich zwei u-förmige Aufnahmen 34 und 36 auf, in denen die Federschienen 28 und 30 aufgenommen sind. Die Aufnahmen 34 und 36 umfassen die Federschienen 28 und 30 jeweils über einen größeren Teil ihres Querschnitt, wobei der mit dem Wischerarm 16 korrespondierende Teil der Anschlussvorrichtung 15 auf der konvexen Seite 29 des Tragelements 12 angeordnet ist, während die konkave Seite 31 dieser gegenüberliegt.

In Fig. 3 ist die Anschlussvorrichtung 15 schematisch dargestellt, wobei in der Aufnahme 34 die entsprechende Federschiene 28 eingezeichnet ist, während die Federschiene 30, nicht in der entsprechenden Aufnahme 36 liegt. Es ist erkennbar, dass die Aufnahmen 34 und 36 die Federschienen 28 und 30 passend umgreifen. Im Bereich oberhalb der Federschienen 28 und 30 sowie oberhalb des Spalts 32 weist die Anschlussvorrichtung 15 eine Aussparung 40 auf, in die, wenn das Wischblatt 10 zusammengebaut ist, ein Kopfteil einer Wischleiste zu liegen kommt.

Das in Fig. 4 von unten dargestellte Wischblatt 10, das ohne die Wischleiste 14 bzw. Wischerlippe 26 gezeichnet ist, zeigt die Federschienen 28 und 30, den Spalt 32 sowie die Aufnahmen 34 und 36 der Anschlussvorrichtung 15. Es ist erkennbar, dass bei dieser Ausführungsform des Wischblatts 10 die Federschienen 28 und 30 vollständig voneinander getrennt sind und lediglich durch die Anschlussvorrichtung 15 bzw. über Endkappen 38, von denen in Fig. 4 nur eine an einem Ende gezeichnet ist, zusammengehalten werden.

In den nachfolgenden Ausführungsvarianten sind gleiche Teile jeweils mit der gleichen Bezugsziffer benannt.

In Fig. 5 ist die Federschiene 28 sowie die Aufnahme 34 zu erkennen, die in diesem Ausführungsbeispiel geteilt ist und ein erstes Aufnahmeteil 42 sowie ein zweites Aufnahmeteil 44 aufweist. Das erste Aufnahmeteil 42 ist auf der oberen konvexen Seite 29 des Tragelements angeordnet und ragt mit einem Seitenteil 46 teilweise über den Rand der Federschiene 28. Ferner weist das erste Aufnahmeteil 42 eine Steckaufnahme 48 auf, die die Form einer Sacklochbohrung besitzt. Die Steckaufnahme 48 ist fluchtend zu einem Durchbruch 50 in der Federschiene 28 angeordnet.

Das zweite Aufnahmeteil 44 besitzt ebenfalls ein Seitenteil 52, das um den Rand der Federschiene 28 gelegt werden kann. Ferner ist am zweiten Aufnahmeteile 44 ein Steckkörper 54 angeordnet, der während der Montage durch den Durchbruch 50 in die Steckaufnahme 48 geführt wird. Um die Seitenteile 46, 52 nach der Montage zueinander zu zentrieren sind an deren aneinander zugewandten Flächen Zentriermittel in Form einer Zentriererhebung 56 und einer Zentrieraufnahme 58 vorgesehen.

Nach dem Zusammenfügen der Aufnahmeteile 42, 44 ist die in der rechten Bildhälfte in Fig. 5 dargestellte Position eingenommen. Zur besseren Fixierung werden die Aufnahmeteile 42, 44 an deren Berührflächen miteinander verklebt.

In Fig. 6 ist ein weiteres Ausführungsbeispiel der Aufnahme 34 in einer gegenüber Fig. 5 vergrößerten Darstellung bereits in Zusammenbaustellung gezeigt. Der Steckkörper 54 ragt auch hier durch einen Durchbruch 50 in der Federschiene 28 und in die Steckaufnahme 48. Die Steckaufnahme 48 ist ihrerseits als Durchgangsöffnung 60 ausgeführt. An der von der Federschiene abgewandten Seite erweitert sich die Durchgangsöffnung 60 in Form einer Stufe 62.

Nach der Montage der Aufnahmeteile 42, 44 erstreckt sich der Steckkörper 54 in die Steckaufnahme 48 in seiner in Fig. 6 strichlinierten Form. In Richtung des Pfeils 64 wird nun der Kopf des Steckkörper 54 mit Wärme und Druck beaufschlagt bis eine Plastifizierung eintritt und sich der Kopf an der Stufe 62 angelegt. Dadurch wird eine feste, nicht lösbare Verbindung geschaffen.

Auf der der Stufe 62 gegenüberliegenden Seite am Aufnahmeteil 44 kann ebenfalls mit Wärme und Druck eingewirkt werden bis sich eine Aufweitung des Steckkörpers 54 im Bereich des Durchbruchs 50 und damit ein Verklemmen einstellt.

Im Bereich der Seitenränder überlappen sich die Seitenteile 46, 52 und verrasten im Bereich einer Hinterschneidung 64.

Auch die Verbindung des Steckkörper 54 mit der Stufe 62 kann in der Form einer Verrastung stattfinden.

In Fig. 7 ist eine Aufnahme 34 in Teil montierbar Ansicht dargestellt, bei der die Aufnahmeteile 42, 44 über ein Filmscharniergelenk 64 miteinander verbunden sind. Auch hier wird bei der Montage der Steckkörper 54 durch den Durchbruch 50 in die Steckaufnahme 48 eingebracht und gegebenenfalls in die Stufe 62 erweitert oder verrastet.

Auch wenn hier die Steckkörper 54 jeweils als Element des Aufnahmeteil 44 dargestellt sind ist es gar ersichtlich, dass der Steckkörper auch am Aufnahmeteil 42 und die Steckaufnahme Anteil 44 realisiert werden können. Werden mehrere Steckkörper bzw. Steckaufnahmen vorgesehen ist möglich, diese gleichermaßen oder alternierend anzuordnen.

## Patentansprüche

1. Wischblatt zum Wischen von Scheiben, insbesondere von Kraftfahrzeugscheiben, mit einem Tragelement (12) zum Aufnehmen einer Wischleiste (14), an dem eine Anschlussvorrichtung (20) befestigt ist, die ein wischblattseitiges Teil (15) mit krallenartigen Aufnahmen (34, 36) aufweist, die das Tragelement (12) zumindest bereichsweise umgreifen, **dadurch gekennzeichnet, dass** die Aufnahmen (34, 36) zweiteilig ausgeführt sind, mit einem ersten und einem zweiten Aufnahmeteil, wobei das erste Aufnahmeteil mindestens eine Steckaufnahme und das zweite Aufnahmeteil mindestens einen Steckkörper aufweist, der während der Montage des Wischblatts in die Steckaufnahme eingesteckt und befestigt wird, wobei das Tragelement (12) mindestens eine Öffnung aufweist, durch die der mindestens eine Steckkörper in Zusammenbaustellung ragt.

2. Wischblatt nach einem der vorhergehenden Ansprüche, **dadurch gekennzeichnet, dass** die mindestens eine Steckaufnahme die Form einer Sacklochbohrung aufweist.

3. Wischblatt nach Anspruche 1, **dadurch gekennzeichnet, dass** die Steckaufnahme die Form einer Durchgangsbohrung, insbesondere einer Stufenbohrung aufweist.

4. Wischblatt nach Anspruch 3, **dadurch gekennzeichnet, dass** der Steckkörper in Zusammenbaustellung aufgeweitet ist.

5. Wischblatt nach einem der vorhergehenden Ansprüche, **dadurch gekennzeichnet, dass** die jeweils ersten Aufnahmeteil mit den jeweils zweiten Aufnahmeteilen verrastet und/oder verklebten sind.

6. Wischblatt nach einem der vorhergehenden Ansprüche, **dadurch gekennzeichnet, dass** die jeweils ersten Aufnahmeteile mit den jeweils zweiten Aufnahmeteilen über jeweils ein Filmscharniergelenk verbunden sind.

7. Verfahren zum Hersteller eines Wischblatts nach einem der vorhergehenden Ansprüche, **dadurch gekennzeichnet, dass** das wischblattseitige Teil (15) der Anschlussvorrichtung (20) mit seinen ersten Aufnahmeteilen auf eine konvexe Oberseite des Tragelements (12) gelegt wird und die zweiten Aufnahmeteile von einer konkaven Unterseite so angebracht werden, dass Steckkörper der zweiten Aufnahmeteilen in Steckaufnahmen der ersten Aufnahmeteile ragen und die beiden Aufnahmeteile relativ zueinander befestigen, wobei die Steckkörper mittels einer Wärmebehandlung nach dem Einstecken in die Steckaufnahmen aufgeweitet werden.

## Claims

1. Wiper blade for wiping windows, in particular motor vehicle windows, with a supporting element (12) for receiving a wiper strip (14), to which said supporting element is fastened a connection device (20) which has a wiper-blade-side part (15) with claw-like receptacles (34, 36) which engage around the supporting element (12) at least in regions, **characterized in that** the receptacles (34, 36) are of two-part design, with a first and a second receiving part, wherein the first receiving part has at least one plug-in receptacle and the second receiving part has at least one plug-in body which is plugged into the plug-in receptacle and fastened during the mounting of the wiper blade, wherein the supporting element (12) has at least one opening through which the at least one plug-in body projects in the assembly position.

2. Wiper blade according to either of the preceding claims, **characterized in that** the at least one plug-in receptacle has the shape of a blind hole bore.

3. Wiper blade according to Claim 1, **characterized in that** the plug-in receptacle has the shape of a through bore, in particular of a stepped bore.

4. Wiper blade according to Claim 3, **characterized in that** the plug-in body is expanded in the assembly position.

5. Wiper blade according to one of the preceding claims, **characterized in that** the first receiving part in each case are latched and/or adhesively bonded to the second receiving parts in each case.

6. Wiper blade according to one of the preceding claims, **characterized in that** the first receiving parts in each case are connected to the second receiving parts in each case via a respective film hinge joint.

7. Method for producing a wiper blade according to one of the preceding claims, **characterized in that** the wiper-blade-side part (15) of the connection device (20) is placed with its first receiving parts onto a convex upper side of the supporting element (12) and the second receiving parts are fitted from a concave lower side in such a manner that plug-in bodies of the second receiving parts project into plug-in receptacles of the first receiving parts and fasten the two receiving parts relative to each other, wherein the plug-in bodies are expanded by means of a heat treatment after being plugged into the plug-in receptacles.

## Revendications

1. Balai d'essuie-glace pour essayer des vitres, en particulier des vitres de véhicules automobiles, comprenant un élément de support (12) pour recevoir une raclette de balai d'essuie-glace (14) sur laquelle est fixé un dispositif de raccordement (20) qui présente une partie du côté du balai d'essuie-glace (15) avec des logements de type griffe (34, 36) qui viennent en prise au moins en partie autour de l'élément de support (12), **caractérisé en ce que** les logements (34, 36) sont réalisés en deux parties, avec une première et une deuxième partie de logement, la première partie de logement présentant au moins un logement d'enfichage et la deuxième partie de logement présentant au moins un corps d'enfichage qui est enfiché et fixé dans le logement d'enfichage au cours du montage du balai d'essuie-glace, l'élément de support (12) présentant au moins une ouverture à travers laquelle pénètre l'au moins un corps d'enfichage dans la position assemblée.

2. Balai d'essuie-glace selon l'une quelconque des revendications précédentes, **caractérisé en ce que** l'au moins un logement d'enfichage présente la forme d'un alésage borgne.

3. Balai d'essuie-glace selon la revendication 1, **caractérisé en ce que** le logement d'enfichage présente la forme d'un alésage traversant, en particulier d'un alésage étagé.

4. Balai d'essuie-glace selon la revendication 3, **caractérisé en ce que** le corps d'enfichage est élargi dans la position installée.

5. Balai d'essuie-glace selon l'une quelconque des revendications précédentes, **caractérisé en ce que** la première partie de logement sont encliquetées et/ou collées aux deuxièmes parties de logement respectives.

6. Balai d'essuie-glace selon l'une quelconque des revendications précédentes, **caractérisé en ce que** les premières parties de logement respectives sont connectées aux deuxièmes parties de logement respectives par le biais d'une articulation à charnière à film respective.

7. Procédé de fabrication d'un balai d'essuie-glace selon l'une quelconque des revendications précédentes, **caractérisé en ce que** la partie du côté du balai d'essuie-glace (15) du dispositif de raccordement (20) est placée avec ses premières parties de logement sur un côté supérieur convexe de l'élément de support (12) et les deuxièmes parties de logement sont montées depuis un côté inférieur concave de telle sorte que des corps d'enfichage des deuxièmes parties de logement pénètrent dans des logements d'enfichage des premières parties de logement et fixent l'une par rapport à l'autre les deux parties de logement, les corps d'enfichage étant élargis au moyen d'un traitement thermique après l'enfichage dans les logements d'enfichage.
